# EUROPÄISCHE PATENTSCHRIFT

(11) **EP 2 569 650 B1**
(45) Veröffentlichungstag und Bekanntmachung des Hinweises auf die Patenterteilung: **20.07.2016**
(21) Anmeldenummer: 11717994.5
(22) Anmeldetag: 26.04.2011
(51) Int. Cl.: G01S 13/46, G01S 15/87, G01S 15/42, G01S 15/93

(54) **VERFAHREN UND VORRICHTUNG ZUR BESTIMMUNG DER POSITION EINES OBJEKTES RELATIV ZU EINEM FAHRZEUG, INSBESONDERE EINEM KRAFTFAHRZEUG, ZUR VERWENDUNG IN EINEM FAHRERASSISTENZSYSTEM DES FAHRZEUGES**
METHOD AND APPARATUS FOR DETERMINING THE POSITION OF AN OBJECT RELATIVE TO A VEHICLE, IN PARTICULAR A MOTOR VEHICLE, FOR USE IN A DRIVER ASSISTANCE SYSTEM FOR THE VEHICLE
PROCÉDÉ ET DISPOSITIF POUR LA DÉTERMINATION DE LA POSITION D'UN OBJET PAR RAPPORT À UN VÉHICULE, EN PARTICULIER UN VÉHICULE À MOTEUR, EN VUE DE LEUR UTILISATION DANS UN SYSTÈME D'ASSISTANCE DU CONDUCTEUR DU VÉHICULE

(30) Priorität: 11.05.2010 DE 102010028829
(43) Veröffentlichungstag der Anmeldung: 20.03.2013
(73) Patentinhaber: Robert Bosch GmbH, 70442 Stuttgart (DE)
(72) Erfinder: SCHMID, Dirk, 75397 Simmozheim (DE); SCHUMANN, Michael, 70597 Stuttgart (DE)
(86) Internationale Anmeldenummer: PCT/EP2011/056519
(87) Internationale Veröffentlichungsnummer: WO 2011/141289

(56) Entgegenhaltungen:
- DE-A1- 3 104 993
- DE-A1- 4 023 538
- US-A- 3 419 845
- US-A1- 2003 214 880
- YATA T ET AL: "Wall following using angle information measured by a single ultrasonic transducer", ROBOTICS AND AUTOMATION, 1998. PROCEEDINGS. 1998 IEEE INTERNATIONAL CO NFERENCE ON LEUVEN, BELGIUM 16-20 MAY 1998, NEW YORK, NY, USA,IEEE, US, Bd. 2, 16. Mai 1998 (1998-05-16), Seiten 1590-1596, XP010281204, DOI: DOI:10.1109/ROBOT.1998.677372 ISBN: 978-0-7803-4300-9

## Beschreibung

Die Erfindung beschreibt ein Verfahren sowie eine Vorrichtung zur Bestimmung der Position eines Objektes relativ zu einem Fahrzeug, insbesondere einem Kraftfahrzeug, zur Verwendung in einem Fahrerassistenzsystem des Fahrzeuges.

### Stand der Technik

Im Bereich der Fahrerassistenzsysteme für Kraftfahrzeuge kamen in der Vergangenheit bevorzugt Ultraschallsensoren zum Einsatz. Konventionelle Ultraschallsensoren liefern jedoch lediglich Informationen über die Entfernung eines Objektes relativ zu der Position des Ultraschallsensors, nicht jedoch über den relativen Ablagewinkel des Objektes. Für verschiedene Fahrerassistenzsysteme, wie zum Beispiel die Parkraumvermessung oder automatische Ein-/Ausparksysteme, ist jedoch die relative Position eines Objektes, also neben der Entfernung auch der Ablagewinkel von entscheidender Bedeutung.

Aus der DE 40 23 538 A1 ist eine Kollisionswarneinrichtung mit einer Einrichtung zur berührungslosen Abstandsmessung bekannt, bei der mindestens zwei Ultraschallsensoren in einem vorgegebenen Abstand angeordnet sind und eine Einrichtung zur Auswertung der Laufzeiten zwischen dem Aussenden jeweils eines Ultraschallsignals und dem Empfangen eines reflektierten Ultraschallsignals des jeweils gleichen und des jeweils anderen Ultraschallsensors (Kreuzmessung) vorgesehen ist. Dabei wird mit der Einrichtung zur Auswertung der Laufzeiten geprüft, welcher von mehreren vorgegebenen mathematischen Beziehungen die jeweils aus den Laufzeiten errechneten Entfernungen gehorchen und in Abhängigkeit von dem Ergebnis der Prüfung wird eine von mehreren vorgegebenen Gleichungen zur Berechnung eines Abstandes verwendet. Auf diese Weise kann auf die Art und die relative Lage des Objektes geschlossen werden.

### Offenbarung der Erfindung

Die vorliegende Erfindung stellt ein Verfahren zur Bestimmung der Position eines Objektes relativ zu einem Fahrzeug, insbesondere einem Kraftfahrzeug, zur Verwendung in einem Fahrerassistenzsystem des Fahrzeuges bereit, bei dem von einem an dem Fahrzeug angeordneten Ultraschallsensor ein erster Ultraschallpuls ausgesendet wird, wobei der Ultraschallpuls mehrere vorgegebene Sendefrequenzen umfasst, die zu einer Variation der Richtcharakteristik des Ultraschallsensors führen. Der ausgesendete erste Ultraschallpuls wird an dem Objekt reflektiert und als erster Echopuls durch den aussendenden oder einen anderen an dem Fahrzeug angeordneten Ultraschallsensor wieder empfangen. Anschließend wird ein Frequenzspektrum des ersten Echopulses bestimmt und in Abhängigkeit von dem Frequenzspektrum des ersten Echopulses und den Richtcharakteristiken ein erster Absolutwert eines relativen Ablagewinkels des Objektes bestimmt.

Die vorliegende Erfindung stellt außerdem eine Vorrichtung zur Bestimmung der Position eines Objektes relativ zu einem Fahrzeug, insbesondere einem Kraftfahrzeug, zur Verwendung in einem Fahrerassistenzsystem des Fahrzeuges bereit mit mindestens einem Ultraschallsender zum Aussenden von mindestens einem Ultraschallpuls wobei der Ultraschallpuls mehrere vorgegebene Sendefrequenzen umfasst, die zu einer Variation der Richtcharakteristik des Ultraschallsensors führen, und einem Ultraschallempfänger zum Empfangen eines an dem Objekt reflektierten Echopulses. Eine Auswerteeinheit bestimmt ein Frequenzspektrum des Echopulses und bestimmt in Abhängigkeit von dem Frequenzspektrum und den Richtcharakteristiken einen Absolutwert eines relativen Ablagewinkels des Objektes.

Vorteilhaft wird dabei ein frequenzmodulierter Ultraschallpuls, insbesondere in Form eines Chirps, ausgesendet.

Bei Ultraschallsensoren ist die Richtcharakteristik abhängig von der Sendefrequenz. Variiert man die Sendefrequenz, so verändert sich auch die Richtcharakteristik. Die Richtcharakteristik beschreibt die Winkelabhängigkeit der Stärke empfangener oder gesendeter Signale. Somit sind die Amplitude des in Richtung des Objektes ausgesendeten Ultraschallpulses und damit auch die Amplitude des durch Reflektion an dem Objekt entstehenden Echopulses aber abhängig von der Sendefrequenz und von dem relativen Ablagewinkel des Objektes. Dieser Zusammenhang führt dazu, dass eine gezielte Variation der Sendefrequenz zu einem charakteristischen Frequenzspektrum des Echopulses in Abhängigkeit von der Winkelposition des Objektes führt. Sind die Richtcharakteristiken zu den einzelnen Sendefrequenzen bekannt, so kann auf Basis des Frequenzspektrums des Echopulses ein Absolutwert eines relativen Ablagewinkels des Objektes bestimmt werden.

Durch die Ausnutzung der Abhängigkeit der Frequenzspektrums von der Richtcharakteristik und dem relativen Ablagewinkel des Objektes ist es im Gegensatz zu bekannten Trilaterations-Methoden möglich, einen Absolutwert eines relativen Ablagewinkels eines Objektes mit Hilfe eines einzigen Ultraschallsensors zu bestimmen. Außerdem werden Mehrdeutigkeiten, wie sie bei Verwendung von bekannten Trilaterations-Methoden unter bestimmten Bedingungen, insbesondere bei gleichzeitiger Ortsbestimmung mehrerer Objekte, auftreten, vermieden. Somit tragen das erfindungsgemäße Verfahren und die erfindungsgemäße Vorrichtung zu einer deutlichen Verbesserung der Qualität der Positionsbestimmung eines Hindernisses relativ zu einem Fahrzeug und damit zur erhöhten Zuverlässigkeit von Fahrerassistenzsystemen bei.

Ab einer bestimmten Sendefrequenz bilden sich in der Richtcharakteristik des Ultraschallsensors zwischen einer Hauptkeule und dann auftretenden Nebenkeulen Minima aus, deren Lage von der jeweiligen Sendefrequenz abhängt. Diese Minima führen dazu, dass in der dem jeweiligen Winkelwert entsprechenden Richtung nur ein Sendesignal mit sehr geringer Amplitude ausgesendet wird. Zwangsläufig weist auch ein darauf basierendes Echosignal nur eine sehr geringe Amplitude auf, was im Frequenzspektrum des Echosignals eindeutig erkennbar ist. Aus dem Frequenzwert, bei welchem dieses Minimum im Frequenzspektrum des Echosignals auftritt, kann dann in Kenntnis der Richtcharakteristiken auf den Absolutwert des relativen Ablagewinkels des Objektes geschlossen werden. Gemäß einer Ausführungsform der Erfindung werden daher die Minima im Frequenzspektrum genutzt, um den Absolutwert des relativen Ablagewinkels des Objektes zu bestimmen.

Da der Wirkungsgrad und damit die abgestrahlte Leistung bei Sendefrequenzen weit oberhalb der Resonanzfrequenz des Ultraschallsensors rapide sinkt, ist es praktisch nicht möglich, die Sendefrequenz so weit zu erhöhen, dass sich auch in einem Winkelbereich nahe der Hauptstrahlrichtung (Emissionsrichtung 0°) Minima in der Richtcharakteristik und damit auch im Frequenzspektrum des Echosignals ausprägen. Aufgrund der unterschiedlichen Formen, insbesondere der unterschiedlichen Steigungen, der einzelnen Richtcharakteristiken ergibt sich aber abhängig von dem Ablagewinkel des Objektes auch ein jeweils charakteristischer Amplitudenverlauf im Frequenzspektrum des Echosignals. Dabei gilt grundsätzlich, dass ein Gradient der Amplitude mit steigender Frequenz umso größer wird, je größer der Ablagewinkel ist. Gemäß einer Ausführungsform der Erfindung kann daher alternativ oder zusätzlich zur Auswertung der Minima auch der Amplitudengradient in dem Frequenzspektrum des Echosignals ausgewertet werden, um den Absolutwert des relativen Ablagewinkels des Objektes zu bestimmen.

Grundsätzlich besteht die Problematik, dass die erfindungsgemäße Auswertung des Frequenzspektrums zunächst nur die Ermittlung eines Absolutwertes des relativen Ablagewinkels ermöglicht. Gemäß einer Ausführungsform der Erfindung wird diese Problematik aber dadurch gelöst, dass der reale Ablagewinkel mit Hilfe eines zweiten Echopulses bestimmt wird. Dazu wird von einem an dem Fahrzeug angeordneten Ultraschallsensor mindestens ein zweiter Ultraschallpuls ausgesendet, wobei auch der zweite Ultraschallpuls mehrere vorgegebene Sendefrequenzen umfasst, die zu einer Variation der Richtcharakteristik des Ultraschallsensors führen. Auch der zweite Ultraschallpuls wird an dem Objekt reflektiert und als zweiter Echopuls durch den aussendenden oder einen anderen an dem Fahrzeug angeordneten Ultraschallsensor wieder empfangen. Anschließend wird in analog zur Auswertung des ersten Echopulses das Frequenzspektrum des zweiten Echopulses bestimmt und ein Absolutwert eines relativen Ablagewinkels des Objektes in Abhängigkeit von dem Frequenzspektrum des zweiten Echopulses und den Richtcharakteristiken bestimmt. Schließlich kann durch Triangulation des ersten und zweiten Absolutwertes des Ablagewinkels ein realer, das heißt vorzeichenbehafteter Ablagewinkel ermittelt werden. Diese Auswertung basiert grundsätzlich auf einer zweiten Messung aus einer veränderten Position. Die Positionsveränderung kann dabei durch Verwendung eines zweiten Ultraschallsensors und/oder durch eine Bewegung des Fahrzeuges bewirkt werden. Wobei bei Bewegung des Fahrzeuges die zusätzliche Voraussetzung erfüllt sein muss, dass die Positionsveränderung eine für die Triangulation notwendige Veränderung des Basisabstandes beinhaltet, was zum Beispiel dann der Fall ist, wenn das Fahrzeug seitlich an dem Objekt vorbeifährt.

Gemäß einer Ausführungsform der Erfindung können demnach der erste und der zweite Ultraschallpuls durch verschiedene Ultraschallsensoren oder im Fall eines bewegten Fahrzeuges auch durch denselben Ultraschallsensor ausgesendet werden.

Handelt es sich bei dem Objekt um ein bewegtes Objekt, wird aufgrund des sogenannten Doppler-Effektes die Empfangsfrequenz relativ zur Sendefrequenz verschoben. Demzufolge wird auch das gesamte Frequenzspektrum des Echosignals entsprechend verschoben. Gemäß einer Ausführungsform der Erfindung wird eine derartige Verschiebung des Frequenzspektrums des empfangenen Echopulses im Vergleich zum Frequenzspektrum des ausgesendeten Ultraschallpulses bestimmt und die absolute Winkelposition unter Berücksichtigung dieser Verschiebung bestimmt. Auf diese Weise können der Doppler-Effekt kompensiert und damit zuverlässige Winkelpositionswerte sichergestellt werden.

Die Verschiebung des Frequenzspektrums kann dabei beispielsweise durch Vergleich der niedrigsten und/oder höchsten Sendefrequenz des Ultraschallpulses mit einer niedrigsten bzw. höchsten Empfangsfrequenz des Echopulses bestimmt werden.

Weitere Merkmale und Vorteile von Ausführungsformen der Erfindung ergeben sich aus der nachfolgenden Beschreibung mit Bezug auf die beigefügten Figuren.

### Vorteile der Erfindung

### Kurze Beschreibung der Zeichnungen

Es zeigen:
- Fig. 1: eine schematische Draufsicht auf ein Kraftfahrzeug mit einer erfindungsgemäßen Vorrichtung zur Bestimmung der Position eines Objektes,
- Fig. 2: ein schematisches Ablaufdiagramm eines Verfahrens gemäß einer Ausführungsform der Erfindung,
- Fig. 3: eine schematische Darstellung einer frequenzabhängigen Richtcharakteristik eines Ultraschallsensors und
- Fig. 4: eine schematische Darstellung eines Frequenzspektrums eines Echopulses,

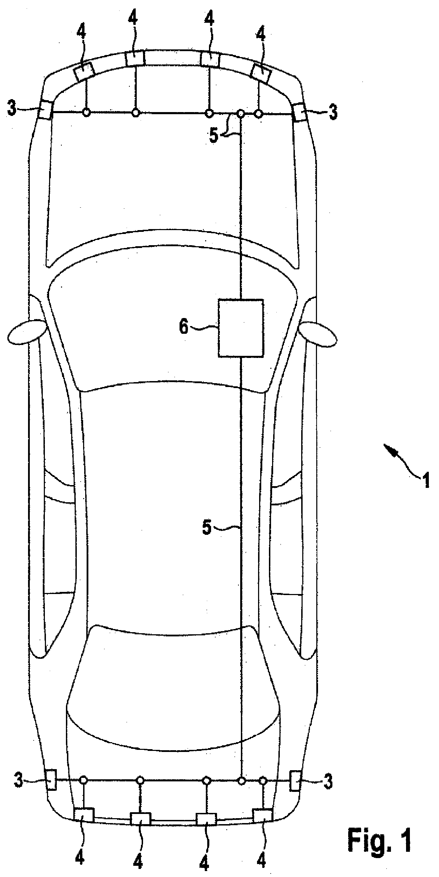

In Fig. 1 ist ein Kraftfahrzeug 1 dargestellt, welches mit einer erfindungsgemäßen Vorrichtung zur Bestimmung der Position eines Hindernisses relativ zu dem Kraftfahrzeug ausgestattet ist. Die Vorrichtung weist zwei linksseitig und zwei rechtsseitig des Kraftfahrzeugs angeordnete Ultraschallsensoren 3 auf. Im Frontbereich sowie im Heckbereich des Kraftfahrzeuges 1 sind weitere Ultraschallsensoren 4 angeordnet. Die Ultraschallsensoren 3 und 4 sind über Signalleitungen 5, die zum Beispiel als CAN-Bus oder auch als Punkt-zu-Punkt-Verbindung ausgeführt sein können, mit einer Auswerteeinheit 6 zum Auswerten der Sensorsignale verbunden. Eine nicht dargestellte übergeordnete Steuereinheit, in welche auch die Auswerteeinheit 6 integriert sein kann, steuert das Aussenden von Ultraschallpulsen mittels der Ultraschallsensoren 3 und 4. Die Ultraschallsensoren weisen zum Beispiel jeweils ein Piezoelement auf, welches durch elektrische Anregung eine Membran zum Aussenden von Ultraschallwellen anregt. Die Ultraschallpulse werden von der Oberfläche eines möglicherweise in der Fahrzeugumgebung befindlichen Objektes reflektiert und von den Ultraschallsensoren als Echopulse wieder empfangen. Die übergeordnete Steuereinheit kann dazu die Ultraschallsensoren 3 und 4 in einen Empfangsmodus schalten. In dem Empfangsmodus regen die reflektierten Ultraschallwellen die Membran der Ultraschallsensoren zu einer Schwingung an. Diese Schwingung kann über das Piezoelement in elektrische Signale umgewandelt werden.

Neben der beschriebenen Ausführungsform der Ultraschallsensoren 3 und 4 als Ultraschallwandler, die eine Umschaltung zwischen Sende- und Empfangsbetrieb erlauben, sind auch Ultraschallsensoren verwendbar, die getrennte Ultraschallsender und -empfänger aufweisen. Die Auswerteelektronik kann, wie dargestellt, zentral angeordnet sein oder auch zumindest teilweise dezentral den einzelnen Ultraschallsensoren 3 und/oder 4 zugeordnet sein.

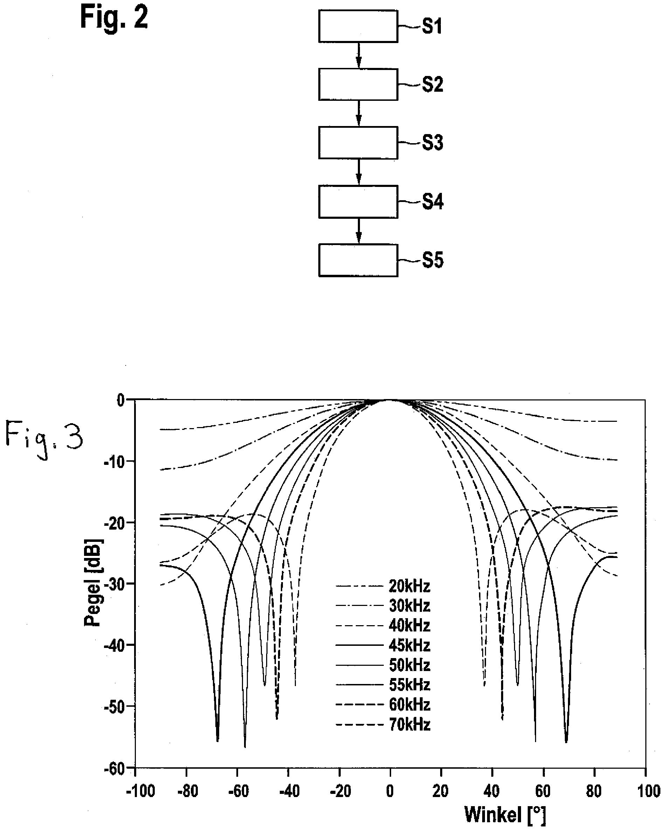

Ein Verlauf des Verfahrens gemäß einer Ausführungsform der Erfindung ist in Fig. 2 schematisch in Form eines Flussdiagramms dargestellt. In einem Schritt S1 werden zwei Ultraschallpulse ausgesendet, wobei die Ultraschallpulse jeweils mehrere vorgegebene Sendefrequenzen umfassen, die zu einer Variation der Richtcharakteristik des Ultraschallsensors führen. Vorteilhaft werden dabei frequenzmodulierte Ultraschallpulse, insbesondere in Form von Chirps, ausgesendet.

Die Ultraschallpulse können dabei sequentiell von einem einzigen Ultraschallsensor 3 oder 4 oder alternativ dazu auch von zwei verschiedenen Ultraschallsensoren, vorzugsweise zwei benachbarten Ultraschallsensoren, ausgesendet werden. In diesem Fall kann das Aussenden der Ultraschallpulse auch zeitlich parallel oder zumindest überlappend erfolgen.

In einem Schritt S2 werden die an einem Objekt reflektierten Ultraschallpulse als Echopulse wieder empfangen. Die Echopulse können sowohl von dem Ultraschallsensor empfangen werden, welcher den zugehörigen Ultraschallpuls ausgesendet hat, als auch von einem anderen, an dem Kraftfahrzeug angeordneten Ultraschallsensor. Auch ist es für die Anwendung der Erfindung unerheblich, ob beide Echopulse durch den gleichen Ultraschallsensor oder auch durch zwei verschiedene Ultraschallsensoren empfangen werden. Für die Ermittlung eines realen Ablagewinkels eines Objektes mit Hilfe von Triangulation ist es nur wichtig, dass ein Echopuls aus zwei verschiedenen Positionen empfangen wird.

In einem Schritt S3 werden Frequenzspektren der Echopulse bestimmt.

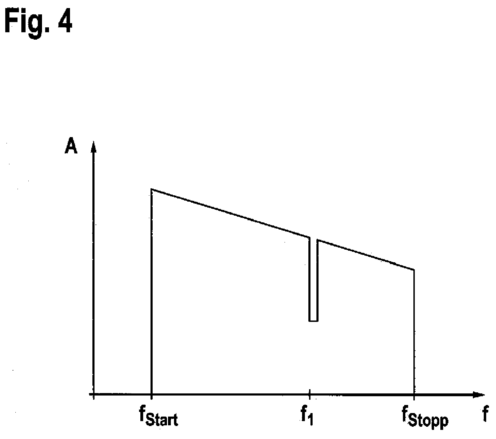

In einem Schritt S4 werden in Abhängigkeit von den Frequenzspektren der Echopulse und den Richtcharakteristiken jeweils Absolutwerte eines relativen Ablagewinkels des Objektes bestimmt. Diese Bestimmung wird im Folgenden anhand der Figuren 3 und 4 noch detailliert erläutert.

In einem Schritt S5 wird ein realer Ablagewinkel des Objektes durch Triangulation des ersten und zweiten Absolutwertes des Ablagewinkels ermittelt.

Um möglichen Ungenauigkeiten bei dem Verfahren Rechnung zu tragen, können die ermittelten Werte für den Ablagewinkel auch in Form eines Winkelbereichs um den ermittelten Wert angegeben werden.

Bei Ultraschallsensoren ist die Richtcharakteristik grundsätzlich frequenzabhängig, das heißt eine veränderte Sendefrequenz ändert die Richtcharakteristik des Ultraschallsensors. Figur 3 zeigt Richtcharakteristiken für einige beispielhaft ausgewählte Sendefrequenzen, wie sie beispielsweise bei einem Ultraschallsender in Form eines Kreiskolbenstrahlers auftreten. Die Richtcharakteristik beschreibt dabei die Winkelabhängigkeit der Stärke des ausgesendeten Ultraschallpulses. Wie deutlich zu erkennen ist, besitzt jede Richtcharakteristik eine charakteristische Form, welche sie von den übrigen Richtcharakteristiken unterscheidet.

Insbesondere bilden sich ab einer bestimmten Sendefrequenz, im Beispielfall ab 45 kHz deutliche Minima aus, welche eine in Hauptstrahlrichtung ausgebildete Hauptkeule von Nebenkeulen trennen.

So weist beispielsweise die zu einer Sendefrequenz von 50 kHz gehörige Richtcharakteristik bei einem absoluten Abstrahlwinkel von knapp 60° Minima auf. Dies führt dazu, dass der Ultraschallsensor bei Betrieb mit dieser Frequenz in diese Richtung nur ein Signal mit sehr geringer Amplitude aussendet. Dies wiederum hat aber zur Folge, dass ein Echosignal, welches von einem Objekt in genau diesem Ablagewinkelbereich reflektiert wird, ebenfalls eine sehr kleine Amplitude aufweist.

Erfindungsgemäß wird nun ein Ultraschallpuls ausgesendet, der mehrere vorgegebene Sendefrequenzen umfasst. Dies kann beispielsweise dadurch erreicht werden, dass die Sendefrequenz zum Beispiel in einem Bereich zwischen 20 kHz und 70 kHz moduliert wird. Beispielhaft sei nun angenommen, dass ein Objekt in einem Ablagewinkel von knapp 60° relativ zum Ultraschallsensor positioniert ist. In diesem Fall weist das Frequenzspektrum des auf dem ausgesendeten Ultraschallpuls basierenden Echopulses einen Verlauf auf, wie er in Figur 4 schematisch dargestellt ist.

Dieses Frequenzspektrum weist grundsätzlich einen rampenförmigen Verlauf auf, wobei die Amplitude ausgehend von einer Startfrequenz f_{Start}, im Beispielsfall 20 kHz, hin zu einer Stoppfrequenz f_{Stopp}, im Beispielfall 70 kHz, sukzessive abnimmt. Bei einer Frequenz f₁ von 50 kHz weist das Frequenzspektrum ein auffälliges Minimum auf. Daraus lässt sich nun folgern, dass das zu erfassende Objekt einen relativen Ablagewinkel haben muss, bei welchem die zur Sendefrequenz von 50 kHz gehörige Richtcharakteristik ebenfalls ein Minimum aufweist. Da die Richtcharakteristiken zu den einzelnen vorgegebenen Sendefrequenzen aber bekannt sind (vgl. Figur 3), lässt sich daraus eindeutig ableiten, dass das Objekt einen absoluten relativen Ablagewinkel von 60°, also einen realen relativen Ablagewinkel von +60° oder -60° haben muss. Diese Unsicherheit kann im Bedarfsfall zum Beispiel in der beschrieben Weise mit Hilfe von Triangulation beseitigt werden.

Aufgrund der unterschiedlichen Formen, insbesondere der unterschiedlichen Steigungen, der einzelnen Richtcharakteristiken ergibt sich aber abhängig von dem Ablagewinkel des Objektes auch ein jeweils charakteristischer Amplitudenverlauf im Frequenzspektrum des Echosignals. Dabei gilt grundsätzlich, dass ein Gradient der Amplitude mit steigender Frequenz umso größer wird, je größer der Ablagewinkel ist. Das heißt die abfallende Rampe des Frequenzspektrums (vgl. Figur 4) zwischen der Startfrequenz f_{Start} und der Stoppfrequenz f_{Stopp} ist umso steiler, je größer der Ablagewinkel ist. Insofern ist in dem Beispielfall eines Objektes mit einem Ablagewinkel von knapp 60° nicht nur die Ausbildung des Minimums im Frequenzspektrum charakteristisch, sondern auch der Amplitudengradient in dem Frequenzspektrum. Folglich kann aber bei bekannten Richtcharakteristiken der absolute Ablagewinkel auch durch Auswertung des Amplitudengradienten ermittelt werden.

Da der Wirkungsgrad und damit die abgestrahlte Leistung bei Sendefrequenzen weit oberhalb der Resonanzfrequenz des Ultraschallsensors rapide sinkt, ist es praktisch nicht möglich, die Sendefrequenz so weit zu erhöhen, dass sich auch in einem Winkelbereich nahe der Hauptstrahlrichtung Minima in der Richtcharakteristik und damit auch im Frequenzspektrum des Echosignals ausprägen. Für die in Figur 3 beispielhaft dargestellten Richtcharakteristiken ist davon der Winkelbereich zwischen -30° bis +30° betroffen. In diesem Winkelbereich ist es damit besonders vorteilhaft, den absoluten Ablagewinkel in Abhängigkeit des Amplitudengradienten zu bestimmen. Die Auswertung des Amplitudengradienten ist aber keineswegs auf diesen Winkelbereich beschränkt, sondern kann alternativ oder zusätzlich auch in Winkelbereichen eingesetzt werden, in welchen sich auch Minima in der Frequenzcharakteristik und damit im Frequenzspektrum des Echosignals ausbilden.

Handelt es sich bei dem zu erfassenden Objekt um ein bewegtes Objekt, so wird aufgrund des sogenannten Doppler-Effektes die Empfangsfrequenz relativ zur Sendefrequenz verschoben. Demzufolge ergibt sich auch ein entsprechend verschobenes Frequenzspektrum des Echosignals. Wird dieser Effekt nicht kompensiert, führt das aber zu Fehlern bei der Bestimmung des Ablagewinkels. Deshalb ist es vorgesehen, eine derartige Verschiebung des Frequenzspektrums des empfangenen Echopulses im Vergleich zum Frequenzspektrum des ausgesendeten Ultraschallpulses zu erfassen und die absolute Winkelposition unter Berücksichtigung dieser Verschiebung zu bestimmen. Im einfachsten Fall wird eine derartige Verschiebung durch einen Vergleich der niedrigsten und/oder höchsten Sendefrequenz des Ultraschallpulses mit einer niedrigsten bzw. höchsten Empfangsfrequenz des Echopulses, also der Startfrequenz f_{Start} bzw. der Stoppfrequenz f_{Stopp} bestimmt.

Neben der Parkraumvermessung oder einer automatischen Ein-/Ausparkfunktion sind das erfindungsgemäße Verfahren und die erfindungsgemäße Vorrichtung selbstverständlich auch für beliebige weitere Fahrerassistenzsysteme, bei denen die Position eines Objektes im Umfeld des Fahrzeuges eine Rolle spielt, einsetzbar. So könnte beispielsweise eine Kollisionswarnung und/oder Kollisionsfolgenminderung durch Einsatz des erfindungsgemäßen Verfahrens deutlich verbessert werden.

## Patentansprüche

1. Verfahren zur Bestimmung der Position eines Objektes relativ zu einem Kraftfahrzeug (1) zur Verwendung in einem Fahrerassistenzsystem des Kraftfahrzeuges (1) bei dem
- von einem an dem Kraftfahrzeug (1) angeordneten Ultraschallsensor (3; 4) ein erster Ultraschallpuls ausgesendet wird, wobei der Ultraschallpuls mehrere vorgegebene Sendefrequenzen umfasst, die zu einer Variation der Richtcharakteristik des Ultraschallsensors (3; 4) führen,
- der ausgesendete erste Ultraschallpuls an dem Objekt reflektiert und als erster Echopuls durch den aussendenden oder einen anderen an dem Kraftfahrzeug (1) angeordneten Ultraschallsensor (3; 4) wieder empfangen wird,
- ein Frequenzspektrum des ersten Echopulses bestimmt wird und
- ein erster Absolutwert eines relativen Ablagewinkels des Objektes in Abhängigkeit von dem Frequenzspektrum des ersten Echopulses und den Richtcharakteristiken bestimmt wird.

2. Verfahren nach Anspruch 1, wobei ein frequenzmodulierter Ultraschallpuls, insbesondere ein Chirp, ausgesendet wird.

3. Verfahren nach Anspruch 2, wobei der Absolutwert des relativen Ablagewinkels anhand von Minima im Frequenzspektrum bestimmt wird.

4. Verfahren nach einem der Ansprüche 1 bis 3, wobei der Absolutwert des relativen Ablagewinkels anhand eines Amplitudengradienten in dem Frequenzspektrum bestimmt wird.

5. Verfahren nach einem der vorhergehenden Ansprüche, wobei
- von einem an dem Fahrzeug (1) angeordneten Ultraschallsensor (3; 4) mindestens ein zweiter Ultraschallpuls ausgesendet wird, wobei der zweite Ultraschallpuls mehrere vorgegebene Sendefrequenzen umfasst, die zu einer Variation der Richtcharakteristik des Ultraschallsensors (3; 4) führen,
- der ausgesendete zweite Ultraschallpuls an dem Objekt reflektiert und als zweiter Echopuls durch den aussendenden oder einen anderen an dem Fahrzeug (1) angeordneten Ultraschallsensor (3; 4) wieder empfangen wird,
- ein Frequenzspektrum des zweiten Echopulses bestimmt wird,
- ein zweiter Absolutwert eines relativen Ablagewinkels des Objektes in Abhängigkeit von dem Frequenzspektrum des zweiten Echopulses und den Richtcharakteristiken bestimmt wird und
- ein realer Ablagewinkel durch Triangulation des ersten und zweiten Absolutwertes des Ablagewinkels ermittelt wird.

6. Verfahren nach Anspruch 5, wobei der erste und der zweite Ultraschallpuls bei bewegtem Fahrzeug (1) durch denselben Ultraschallsensor (3; 4) ausgesendet werden.

7. Verfahren nach Anspruch 5, wobei der erste und der zweite Ultraschallpuls durch verschiedene Ultraschallsensoren (3; 4) ausgesendet werden.

8. Verfahren nach einem der vorhergehenden Ansprüche, wobei eine Verschiebung des Frequenzspektrums des empfangenen Echopulses im Vergleich zum Frequenzspektrum des ausgesendeten Ultraschallpulses bestimmt wird und die absolute Winkelposition unter Berücksichtigung dieser Verschiebung bestimmt wird.

9. Verfahren nach Anspruch 8, wobei die Verschiebung durch Vergleich der niedrigsten und/oder höchsten Sendefrequenz des Ultraschallpulses mit einer niedrigsten bzw. höchsten Empfangsfrequenz (f_{Start}, f_{Stopp}) des Echopulses bestimmt wird.

10. Vorrichtung zur Bestimmung der Position eines Objektes relativ zu einem Kraftfahrzeug (1) zur Verwendung in einem Fahrerassistenzsystem des Kraftfahrzeuges (1) mit
- mindestens einem Ultraschallsender (3; 4) zum Aussenden von mindestens einem Ultraschallpuls, wobei der Ultraschallpuls mehrere vorgegebene Sendefrequenzen umfasst, die zu einer Variation der Richtcharakteristik des Ultraschallsenders (3; 4) führen,
- einem Ultraschallempfänger (3; 4) zum Empfangen eines an dem Objekt reflektierten Echopulses und einer Auswerteeinheit (6) zum Bestimmen eines Frequenzspektrums des Echopulses und zur Bestimmung eines Absolutwertes eines relativen Ablagewinkels des Objektes in Abhängigkeit von dem Frequenzspektrum und den Richtcharakteristiken.

## Claims

1. Method for determining the position of an object relative to a motor vehicle (1) for use in a driver assistance system of the motor vehicle (1), in which
- an ultrasonic sensor (3; 4) arranged on the motor vehicle (1) transmits a first ultrasonic pulse, wherein the ultrasonic pulse comprises multiple prescribed transmission frequencies that result in variation of the directional characteristic of the ultrasonic sensor (3; 4),
- the transmitted first ultrasonic pulse is reflected at the object and received again as a first echo pulse by the transmitting or another ultrasonic sensor (3; 4) arranged on the motor vehicle (1),
- a frequency spectrum of the first echo pulse is determined, and
- a first absolute value of a relative offset angle for the object is determined on the basis of the frequency spectrum of the first echo pulse and the directional characteristics.

2. Method according to Claim 1, wherein a frequency-modulated ultrasonic pulse, particularly a chirp, is transmitted.

3. Method according to Claim 2, wherein the absolute value of the relative offset angle is determined on the basis of minima in the frequency spectrum.

4. Method according to one of Claims 1 to 3, wherein the absolute value of the relative offset angle is determined on the basis of an amplitude gradient in the frequency spectrum.

5. Method according to one of the preceding claims, wherein
- an ultrasonic sensor (3; 4) arranged on the vehicle (1) transmits at least one second ultrasonic pulse, wherein the second ultrasonic pulse comprises multiple prescribed transmission frequencies that result in variation, of the directional characteristic of the ultrasonic sensor (3; 4),
- the transmitted second ultrasonic pulse is reflected at the object and received again as a second echo pulse by the transmitting or another ultrasonic sensor (3; 4) arranged on the vehicle (1),
- a frequency spectrum of the second echo pulse is determined,
- a second absolute value of a relative offset angle for the object is determined on the basis of the frequency spectrum of the second echo pulse and the directional characteristics, and
- a real offset angle is ascertained by triangulation of the first and second absolute values of the offset angle.

6. Method according to Claim 5, wherein the first and the second ultrasonic pulse are transmitted by the same ultrasonic sensor (3; 4) when the vehicle (1) is moving.

7. Method according to Claim 5, wherein the first and the second ultrasonic pulse are transmitted by different ultrasonic sensors (3; 4).

8. Method according to one of the preceding claims, wherein a shift in the frequency spectrum of the received echo pulse in comparison with the frequency spectrum of the transmitted ultrasonic pulse is determined, and the absolute angle position is determined by taking account of this shift.

9. Method according to Claim 8, wherein the shift is determined by comparing the lowest and/or highest transmission frequency of the ultrasonic pulse with a lowest or highest reception frequency (fₛₜₐᵣₜ, fₛₜₒₚ) of the echo pulse.

10. Apparatus for determining the position of an object relative to a motor vehicle (1) for use in a driver assistance system of the motor vehicle (1), having
- at least one ultrasonic transmitter (3; 4) for transmitting at least one ultrasonic pulse, wherein the ultrasonic pulse comprises multiple prescribed transmission frequencies that result in variation of the directional characteristic of the ultrasonic transmitter (3; 4),
- an ultrasonic receiver (3; 4) for receiving an echo pulse reflected at the object, and an evaluation unit (6) for determining a frequency spectrum of the echo pulse and for determining an absolute value of a relative offset angle for the object on the basis of the frequency spectrum and the directional characteristics.

## Revendications

1. Procédé de détermination de la position d'un objet par rapport à un véhicule automobile (1) à utiliser dans un système d'assistance au conducteur du véhicule automobile (1), selon lequel
- une première impulsion ultrasonique est émise par un capteur à ultrasons (3; 4) disposé sur le véhicule automobile (1), l'impulsion ultrasonique comprenant plusieurs fréquences d'émission prédéfinies qui entraînent une variation de la caractéristique directionnelle du capteur à ultrasons (3; 4),
- la première impulsion ultrasonique émise est réfléchie sur l'objet et de nouveau reçue sous la forme d'une première impulsion d'écho par le capteur à ultrasons (3; 4) émetteur ou par un autre capteur à ultrasons (3; 4) disposé sur le véhicule automobile (1),
- un spectre de fréquences de la première impulsion d'écho est défini et
- une première valeur absolue d'un angle d'écart relatif de l'objet est définie en fonction du spectre de fréquences de la première impulsion d'écho et des caractéristiques directionnelles.

2. Procédé selon la revendication 1, selon lequel une impulsion ultrasonique modulée en fréquence, notamment une onde entretenue modulée, est émise.

3. Procédé selon la revendication 2, selon lequel la valeur absolue de l'angle d'écart relatif est définie au moyen des minimums dans le spectre de fréquences.

4. Procédé selon l'une des revendications 1 à 3, selon lequel la valeur absolue de l'angle d'écart relatif est définie au moyen d'un gradient d'amplitude dans le spectre de fréquences.

5. Procédé selon l'une des revendications précédentes, selon lequel
- au moins une deuxième impulsion ultrasonique est émise par un capteur à ultrasons (3; 4) disposé sur le véhicule (1), la deuxième impulsion ultrasonique comprenant plusieurs fréquences d'émission prédéfinies qui entraînent une variation de la caractéristique directionnelle du capteur à ultrasons (3; 4),
- la deuxième impulsion ultrasonique émise est réfléchie sur l'objet et de nouveau reçue sous la forme d'une deuxième impulsion d'écho par le capteur à ultrasons (3; 4) émetteur ou par un autre capteur à ultrasons (3; 4) disposé sur le véhicule automobile (1),
- un spectre de fréquences de la deuxième impulsion d'écho est défini,
- une deuxième valeur absolue d'un angle d'écart relatif de l'objet est définie en fonction du spectre de fréquences de la deuxième impulsion d'écho et des caractéristiques directionnelles et
- un angle d'écart réel est déterminé par triangulation de la première et de la deuxième valeur absolue de l'angle d'écart.

6. Procédé selon la revendication 5, selon lequel la première et la deuxième impulsion ultrasonique sont émises par le même capteur à ultrasons (3; 4) lorsque le véhicule (1) est en mouvement.

7. Procédé selon la revendication 5, selon lequel la première et la deuxième impulsion ultrasonique sont émises par des capteurs à ultrasons (3; 4) différents.

8. Procédé selon l'une des revendications précédentes, selon lequel un décalage du spectre de fréquences de l'impulsion d'écho reçue par rapport au spectre de fréquences de l'impulsion ultrasonique émis est défini et la position angulaire absolue est définie en tenant compte de ce décalage.

9. Procédé selon la revendication 8, selon lequel le décalage est défini par comparaison de la fréquence d'émission la plus basse et/ou la plus élevée de l'impulsion ultrasonique avec une fréquence de réception (fₛₜₐᵣₜ, fₛₜₒₚₚ) la plus basse ou la plus élevée de l'impulsion d'écho.

10. Dispositif de détermination de la position d'un objet par rapport à un véhicule automobile (1) à utiliser dans un système d'assistance au conducteur du véhicule automobile (1), comprenant
- au moins un émetteur à ultrasons (3; 4) destiné à émettre au moins une impulsion ultrasonique, l'impulsion ultrasonique comprenant plusieurs fréquences d'émission prédéfinies qui entraînent une variation de la caractéristique directionnelle du capteur à ultrasons (3; 4),
- un récepteur à ultrasons (3; 4) destiné à recevoir une impulsion d'écho réfléchie sur l'objet et une unité d'interprétation (6) destinée à définir un spectre de fréquences de l'impulsion d'écho et destiné à définir une valeur absolue d'un angle d'écart relatif, de l'objet en fonction du spectre de fréquences et des caractéristiques directionnelles.
